# NOUVEAU FASCICULE DE BREVET EUROPEEN

(11) **EP 0 847 965 B2**
(45) Date de publication et mention de la décision concernant l'opposition: **14.05.2014**
(45) Mention de la délivrance du brevet: 20.10.2004
(21) Numéro de dépôt: 97403006.6
(22) Date de dépôt: 11.12.1997
(51) Int. Cl.: C03C 17/36

(54) **Vitrage comprenant un substrat muni d'un empilement de couches minces pour la protection solaire et-ou l'isolation thermique**
Für den Sonnenschutz und/oder zur Wärmeisolierung dienende Verglasung bestehend aus einem mit dünnen Lagen mehrfach beschichtetem Substrat
Glazing comprising a substrate furnished with a multiplicity of thin layers providing thermal insulation and/or solar protection

(30) Priorité: 12.12.1996 FR 9615265
(43) Date de publication de la demande: 17.06.1998
(73) Titulaire: SAINT-GOBAIN GLASS FRANCE, 92400 Courbevoie (FR)
(72) Inventeur: Boire, Philippe, 75015 Paris (FR); Didier, Fabrice, 92360 Meudon la Foret (FR); Grimal, Jean-Michel, 78300 Poissy (FR)
(74) Mandataire: Renous Chan, Véronique

(56) Documents cités:
- EP-A- 0 638 528
- EP-A- 0 718 250
- US-A- 4 010 304
- US-A- 4 565 719
- US-A- 4 715 879
- US-A- 4 985 312

## Description

L'invention concerne les substrats transparents, notamment en matériau rigide minéral comme le verre, lesdits substrats étant revêtus d'un empilement de couches minces comprenant au moins deux couches à comportement de type métallique pouvant agir sur le rayonnement solaire et/ou le rayonnement infrarouge de grande longueur d'onde.

L'invention concerne plus particulièrement l'utilisation de tels substrats pour fabriquer des vitrages d'isolation thermique et/ou de protection solaire. Ces vitrages sont destinés aussi bien à équiper les bâtiments que les véhicules, en vue notamment de diminuer l'effort de climatisation et/ou de réduire une surchauffe excessive entraînée par l'importance toujours croissante des surfaces vitrées dans les habitacles.

Un type d'empilement de couches connu pour conférer aux substrats de telles propriétés est constitué d'au moins une couche métallique, comme une couche d'argent, qui se trouve disposée entre deux revêtements en matériau diélectrique du type oxyde métallique. Cet empilement est généralement obtenu par une succession de dépôts effectués par une technique utilisant le vide comme la pulvérisation cathodique éventuellement assistée par champ magnétique. Peuvent aussi être prévues deux couches métalliques très fines de part et d'autre de la couche d'argent, la couche sous-jacente en tant que couche d'accrochage, de nucléation, et la surcouche en tant que couche de protection ou « sacrificielle » afin d'éviter l'altération de l'argent si la couche d'oxyde qui la surmonte est déposée par pulvérisation cathodique en présence d'oxygène.

Il est ainsi connu des brevets européens EP-0 611 213, EP-0 678 484 et EP-0 638 528 des empilements de ce type, à une ou deux couches à base d'argent.

On demande actuellement de plus en plus que ces vitrages bas-émissifs ou de protection solaire présentent aussi des caractéristiques inhérentes aux substrats eux-mêmes, notamment esthétiques (qu'ils puissent être galbés), mécaniques (qu'ils soient plus résistants), ou de sécurité (qu'ils ne blessent pas en cas de bris). Cela nécessite de faire subir aux substrats verriers des traitements thermiques connus en eux-mêmes du type bombage, recuit, trempe. Sont tout particulièrement visés les vitrages de type feuilletés destinés à équiper des véhicules, qui sont maintenant quasiment tous bombés et/ou trempés.

Il faut alors adapter l'empilement de couches pour préserver l'intégrité des couches fonctionnelles du type couches en argent, notamment prévenir leur altération. Une première solution consiste à augmenter significativement l'épaisseur des fines couches métalliques évoquées précédemment et qui entourent les couches fonctionnelles : on s'assure ainsi que tout l'oxygène susceptible de diffuser à partir de l'atmosphère ambiante et/ou de migrer à partir du substrat en verre à haute température soit « capté » par ces couches métalliques en les oxydant, sans atteindre la (les) couche(s) fonctionnelle(s).

Cette solution n'est pas dénuée d'inconvénients : les deux couches métalliques s'oxydant largement à « la place » des couches d'argent, elles entraînent notamment une forte augmentation de la transmission lumineuse T_{L}: on peut ainsi obtenir un vitrage bas-émissif ou de protection solaire, bombé ou trempé, de valeur de T_{L} supérieure à 75 et jusqu'à 80% alors que cette valeur était bien inférieure avant le traitement thermique. On pourra se reporter notamment à la demande de brevet EP-A-0 506 507 pour la description d'un tel empilement « trempable » avec une couche d'argent disposée entre une couche d'étain et une couche de nickel-chrome. Mais il est clair que le substrat revêtu avant traitement thermique n'était considéré que comme un produit « semi-fini », les caractéristiques optiques le rendaient fréquemment inutilisable tel quel. Il était donc nécessaire de développer et fabriquer, en parallèle, deux types d'empilement de couches, l'un pour les vitrages non bombés/non trempés, l'autre pour les vitrages destinés à être trempés ou bombés, ce qui peut être compliqué en termes de gestion de stocks et de production notamment.

Une amélioration proposée dans le brevet EP-0 718 250 a permis de s'affranchir de cette contrainte ; l'enseignement de ce document consistant à concevoir un empilement de couches minces tel que ses propriétés optiques, ainsi que thermiques, restaient pratiquement inchangées, que le substrat une fois revêtu de l'empilement subisse ou non un traitement thermique. On parvient à un tel résultat en combinant deux caractéristiques :
□ d'une part, on prévoit au-dessus de la (des) couche(s) fonctionnelle(s) une couche en un matériau apte à faire barrière à la diffusion de l'oxygène à haute température, matériau qui lui-même ne subit pas à haute température une modification chimique ou structurelle qui entraînerait une modification de ses propriétés optiques. Il peut ainsi s'agir de nitrure de silicium Si₃N₄ ou de nitrure d'aluminium AIN,
□ d'autre part, la (les) couche(s) fonctionnelle(s) est (sont) directement au contact du revêtement diélectrique sous-jacent, notamment en oxyde de zinc ZnO.

Si cette solution permet effectivement de conserver au substrat après traitement thermique un niveau de T_{L} et un aspect en réflexion extérieure assez constants, elle est encore susceptible d'amélioration, en ce sens qu'il a été observé qu'avec ce type d'empilement il pouvait apparaître après traitement thermique des défauts optiques parfois visibles à l'oeil nu, se présentant le plus souvent sous la forme d'un mouchetis de points clairs de type « pinholes » ou d'un aspect un peu flou, ce qui est évidemment préjudiciable en termes d'esthétisme et de rendement de production, car cela peut entraîner un taux de rebut anormalement élevé, tout particulièrement dans le cas où ces vitrages sont des vitrages bombés/trempés, de type feuilletés ou non, destinés à équiper des véhicules du type automobile, où des normes très strictes imposent une qualité optique très élevée.

Le but de l'invention est alors de parvenir à remédier à cet inconvénient, notamment en mettant au point un nouveau type d'empilement à couches fonctionnelles du type de ceux décrits précédemment, empilement qui puisse subir des traitements thermiques à haute température de bombage/trempe ou recuit en préservant sa qualité optique.

L'invention a pour objet un vitrage selon la revendication 1. Ce vitrage comprend au moins un substrat verrier transparent muni d'un empilement de couches minces comportant une alternance de n couches fonctionnelles à propriétés de réflexion dans l'infrarouge et/ou dans le rayonnement solaire, métallique à base d'argent ou d'alliage métallique contenant de l'argent, et de (n + 1) « revêtements », avec n ≥ 2. Lesdits « revêtements » sont composés d'une ou d'une pluralité de couches dont au moins une en matériau diélectrique. Ces couches fonctionnelles et ces revêtements sont agencés afin que chaque couche fonctionnelle soit disposée entre deux revêtements.

En vue de préserver la qualité optique de l'empilement au cas où le substrat une fois muni de l'empilement est soumis à un traitement thermique de trempe, bombage, recuit :
□ d'une part, le revêtement disposé au-dessus de la n^{ième} couche fonctionnelle, ou de l'une des couches fonctionnelles, comporte au moins une couche « barrière » en un matériau apte à faire barrière au moins à l'oxygène, à l'eau, et qui est à base de composés de silicium SiO₂, SiOₓC_{y}, SiOₓN_{y}, nitrure de silicium Si₃N₄ ou d'un mélange d'au moins deux de ces composés ou d'un mélange d'AlN et de Si₃N₄.
□ d'autre part, au moins une couche « absorbante » en un matériau apte à « absorber » le matériau constitutif de ladite couche fonctionnelle fait partie :
   → du revêtement disposé au-dessus de ladite couche fonctionnelle et sous la couche « barrière »,
   → ladite couche absorbante étant en un matériau poreux d'une porosité comprise entre 5 et 25% et d'une épaisseur géométrique comprise entre 2 et 30 nm.

De préférence, la couche-barrière est en un matériau apte à également faire barrière au matériau constitutif de la couche fonctionnelle.

Les inventeurs ont en effet mis en évidence que l'apparition de défauts optiques après traitement thermique de ce type d'empilements de couches minces provenait essentiellement de la migration d'une partie, même très faible, du matériau constitutif de la couche fonctionnelle vers les couches qui lui sont adjacentes. On comprend par « matériau constitutif », quand la couche est métallique, aussi bien l'élément métal en question que le métal éventuellement totalement ou partiellement ionisé. Ainsi, quand la couche fonctionnelle est en argent, on a observé une migration d'argent aussi bien sous forme Ag que Ag⁺ vers les couches supérieures, c'est-à-dire disposées au-dessus d'elle, migration se traduisant par la formation « d'amas » d'argent en surface de l'empilement créant un mouchetis inesthétique.

Deux raisons à cette migration sont avancées, d'une part mécanique, d'autre part chimique.

Sur le plan mécanique, lorsque l'empilement est chauffé à haute température, notamment dans l'intervalle de températures allant de 550 à 650°C nécessaire aux opérations usuelles de bombage et/ou de trempe de vitrages, tous les matériaux dont sont constitués les couches minces « réagissent différemment » à cette sollicitation thermique. La couche fonctionnelle en métal à base d'argent va se dilater fortement, et, de manière générale, davantage que les autres couches de l'empilement, notamment celles à base de diélectrique qui lui sont contiguës. La couche fonctionnelle va donc se trouver en fort état de compression à haute température, l'argent sous forme métallique et/ou ionique a alors tendance à se fragiliser, avec une diminution de l'adhésion de la couche avec les couches contiguës, jusqu'à avoir tendance à migrer vers les autres couches pour soulager la contrainte thermo-mécanique à laquelle elle est soumise.

Si, sur le plan chimique cette fois, les couches adjacentes, et tout particulièrement les couches disposées au-dessus d'elle, ne sont pas aptes à bloquer totalement cette migration, on a alors l'apparition des défauts optiques signalés précédemment. Et cela peut être le cas quand on a en tant que revêtements diélectriques disposés au-dessus de la couche fonctionnelle, des matériaux connus du type oxyde métallique, ou même des matériaux choisis pour faire barrière à l'oxygène afin d'éviter la migration d'oxygène de l'extérieur vers la couche fonctionnelle, comme c'est le cas du Si₃N₄. L'invention a alors consisté à prévoir une double protection pour la couche fonctionnelle du type argent.

Il était important de continuer à prévoir au-dessus de la couche fonctionnelle au moins une couche en un matériau apte à empêcher la migration d'oxygène et d'eau de l'atmosphère ambiante vers la couche fonctionnelle, cette diffusion provenant de l'atmosphère s'étant révélée de plus grande ampleur et nettement plus préjudiciable à l'intégrité de la couche fonctionnelle que l'éventuelle migration d'oxygène qui proviendrait cette fois du verre. (Il peut cependant aussi être prévu, pour une sécurité maximale, de disposer également sous la couche fonctionnelle ce type de couche « barrière »). Ainsi, on évite une modification chimique de la couche fonctionnelle, notamment par oxydation/hydratation qui diminuerait ses performances thermiques, et remettrait en question sa qualité optique, ce phénomène de dégradation chimique étant incontrôlable.

Mais l'invention ajoute à cette première protection un moyen pour capter, absorber l'argent qui aurait tendance à migrer hors de la couche, et cela à l'aide d'une couche apte à recevoir une certaine quantité de matériau constitutif de la couche fonctionnelle qui est « excédentaire » sous sollicitation thermo-mécanique. Cette couche dite « absorbante » permettant ainsi de stopper la migration vers les autres couches de l'empilement jusqu'à l'atmosphère extérieure.

Sa place dans l'empilement est variable Si on la dispose au-dessus de la couche fonctionnelle, il est préférable, pour qu'elle puisse remplir son rôle, qu'elle se trouve sous la couche-barrière précédemment évoquée, pour éviter qu'il n'y ait migration à travers la couche-barrière, en créant les défauts optiques précédemment mentionnés, c'est-à-dire la formation « d'amas » de matériau provenant de la couche fonctionnelle, notamment d'argent, qui sont responsables d'un mouchetis inesthétique. Mais on peut aussi prévoir de la disposer sous la couche fonctionnelle.

En fait, la couche « absorbante » est à choisir telle qu'elle présente, de préférence, au moins deux propriétés il est important d'une part que le matériau dont elle est constituée ait une bonne affinité chimique avec le matériau de la couche fonctionnelle, et d'autre part que le matériau de la couche absorbante puisse capter le matériau «excédentaire» de la couche fonctionnelle, le mode d'incorporation de ce matériau « excédentaire» pouvant s'effectuer de différentes manières, notamment par incorporation de type interstitiel ou de type lacunaire.

L'invention s'applique à des empilements comportant une pluralité de couches fonctionnelles, notamment deux couches fonctionnelles alternées avec trois revêtements, du type de celui décrit par exemple dans le brevet EP-0 638 528, ou de trois couches fonctionnelles alternées avec quatre revêtements, du type de celui décrit par exemple dans le brevet EP-0 645 352.

Il s'est avéré qu'il était avantageux que la dernière couche fonctionnelle, celle la plus éloignée du substrat porteur de l'empilement, soit munie à la fois d'une couche barrière et d'une couche absorbante, car il est apparu que c'était celle-ci qui était la plus « exposée » de par sa position dans l'empilement, en ce sens qu'elle était la plus susceptible d'être oxydée par l'atmosphère ambiante et celle à partir de laquelle pouvait migrer le plus facilement une partie de son matériau constitutif jusqu'à la surface extérieure de la dernière couche de l'empilement.

On peut bien sûr prévoir que l'ensemble des couches fonctionnelles soit ainsi muni d'une couche barrière et d'une couche absorbante selon l'invention.

La couche fonctionnelle est de nature métallique, en argent ou en alliage métallique comportant de l'argent.

La couche-barrière selon l'invention est choisie de préférence parmi des matériaux diélectriques dont l'indice de réfraction est avantageusement similaire à ceux utilisés habituellement dans ce type d'empilement, c'est-à-dire compris notamment entre 1,7 et 2,5. Elle peut ainsi remplacer « optiquement » les couches de diélectrique du type oxyde métallique et cumuler une fonction optique interférentielle et une fonction de barrière.

La couche-barrière est à base de composés de silicium du type oxyde SiO₂, oxycarbure de silicium SiOₓC_{y} ou oxynitrure de silicium SiOₓN_{y}, Elle peut être aussi à base de nitrures du type nitrure de silicium Si₃N₄ ou mélange d'au moins Si₃N₄ et AIN.

De manière générale, on sélectionne sinon de préférence l'épaisseur géométrique de la couche-barrière de manière à ce qu'elle ait une épaisseur d'au moins 15 nm.

Venons-en maintenant à la disposition dans l'empilement et à la nature de la couche absorbante selon l'invention. On a vu qu'elle devait permettre d'atténuer l'état de compression de la couche fonctionnelle à haute température en permettant l'incorporation d'une partie de son matériau, sous forme métallique ou ionique notamment. Soit elle peut être disposée directement au contact de la n^{ième} couche fonctionnelle au-dessus, soit elle en est séparée par au moins une couche « intermédiaire » qui se trouve être « perméable » à la migration du matériau sous forme métallique ou ionique à haute température, sans que cela n'entraîne de modification chimique ou structurelle de ladite couche ayant une incidence préjudiciable sur l'aspect optique de l'empilement dans son ensemble. Cette couche ou ces couches intermédiaires susceptible(s) de se trouver entre couche fonctionnelle et couche absorbante sont notamment les couches métalliques fines qui servent de couches de nucléation ou de couches sacrificielles vis-à-vis de la couche fonctionnelle.

Le matériau de la couche absorbante est choisi en un matériau poreux, d'une porosité comprise entre 5 et 25%. On définit ici la porosité par la relation p% = 1-(d₁/d₀), avec d₀ la densité théorique du matériau en question en pourcentage et d₁ sa densité réelle. Cette porosité se traduit souvent, quand le matériau est un diélectrique, par une baisse de son indice de réfraction par rapport à son indice théorique, approximativement dans les mêmes proportions que sa densité. Pour offrir une capacité d'absorption suffisante, on prévoit que cette couche poreuse ait une épaisseur géométrique comprise entre 2 et 30 nm : on peut moduler conjointement porosité et épaisseur pour obtenir l'effet voulu d'absorption complète du matériau de la couche fonctionnelle qui est « excédentaire ».

Cette couche poreuse, selon un premier cas peut être essentiellement métallique, notamment en un matériau choisi parmi l'un au moins des métaux suivants : Ni, Cr, Nb, Sn, Ti, un alliage du type NiCr ou acier. Dans ce cas, il est préférable de cantonner son épaisseur à une gamme allant de 2 à 5 nm, car sa nature optiquement absorbante, si on choisit une couche plus épaisse, diminuerait trop significativement le niveau de transmission lumineuse quand on veut un vitrage hautement transparent.

Selon un second cas, la couche poreuse est choisie en un matériau diélectrique, notamment en un matériau choisi parmi l'un au moins des oxydes suivants : oxyde de zinc ZnO, oxyde de titane TiO₂, oxyde d'aluminium Al₂O₃. La couche dans ce cas peut être nettement plus épaisse et remplir également son rôle interférentiel dans l'empilement.

On peut moduler la porosité de ces différents matériaux en ajustant les conditions de dépôt. Ainsi, lorsque ces couches sont déposées par pulvérisation cathodique, éventuellement assistée par champ magnétique, le choix de la pression régnant dans la chambre de dépôt permet de régler la porosité de la couche : plus la pression du gaz inerte du type argon est importante, plus la porosité tend à augmenter.

Avantageusement, on peut prévoir qu'au moins une des couches fonctionnelles est surmontée d'une fine couche métallique « sacrificielle » au moins partiellement oxydée, notamment d'une épaisseur de 0,5 à 4 nm celle-ci permet de préserver la couche fonctionnelle de l'oxydation, lors du dépôt de l'empilement, quand la couche suivante est à base d'oxyde déposé par pulvérisation cathodique réactive en présence d'oxygène. La couche « sacrificielle » s'oxydant ainsi à la place du métal de la couche fonctionnelle.

Il peut alors être prévu que la couche absorbante de type métallique, poreuse soit disposée directement au-dessus de la couche fonctionnelle et joue alors également le rôle de couche « sacrificielle ». Dans ce cas, son épaisseur doit être suffisante pour que, après son oxydation lors du dépôt de la couche supérieure, il reste une épaisseur suffisante de métal non oxydé apte à jouer son rôle d'absorbeur.

Avantageusement, l'empilement comprend deux couches fonctionnelles à chacune desquelles sont associées une couche-barrière et une couche absorbante.

Dans l'empilement, la couche-barrière ou du moins une des couches-barrière peut constituer l'essentiel du revêtement au sens de l'invention. Elle peut aussi être combinée à d'autres couches en matériau diélectrique, et notamment être surmontée d'au moins une autre couche à base d'oxyde(s) métallique(s) tels que l'oxyde de zinc ZnO, d'étain SnO₂, de titane TiO₂, de niobium Nb₂O₅, l'oxyde de tantale Ta₂O₅, d'aluminium Al₂O₃, de tungstène WO₃, ou tout mélange d'au moins deux de ces oxydes. Il y a notamment deux façons de procéder pour déposer cette couche d'oxyde : soit de manière habituelle, directement sous la forme d'oxyde, soit, notamment lorsqu'elle constitue la dernière couche de l'empilement, sous forme métallique, son oxydation étant alors réalisée postérieurement à son dépôt, lors du traitement thermique à l'air du substrat tout particulièrement. Son épaisseur est de préférence choisie entre 0,5 et 20 nm, notamment entre 1 et 5 nm, mais elle reste bien sûr optionnelle. Les raisons peuvent être multiples, notamment elles peuvent prendre en compte la vitesse de dépôt de ces couches, le prix des matières premières (des cibles si l'on utilise une technique de dépôt par pulvérisation), les indices de réfraction. Le choix judicieux de la ou des couche(s) surmontant la couche barrière peut aussi tenir compte de l'optimisation de l'adhésion de l'empilement à la feuille de polymère thermoplastique du type polyvinylbutyral PVB quand le substrat revêtu de l'empilement est monté en vitrage feuilleté. (On peut ainsi signaler dans ce sens l'enseignement du brevet EP-0 433 136). Ce choix peut aussi prendre en compte les problèmes de corrosion chimiques et/ou mécaniques que l'empilement peut avoir à surmonter, par exemple en fonction de l'atmosphère avec laquelle il va être mis en contact, soit lors du procédé d'élaboration du vitrage (atmosphère lors du traitement thermique par exemple), soit pendant son stockage ou une fois installé.

Par ailleurs, on peut aussi prévoir que au moins une des couches fonctionnelles soit disposée sur un revêtement dont la dernière couche facilite le mouillage de la couche fonctionnelle. Il s'agit plus particulièrement d'une couche de mouillage à base d'oxyde de zinc ZnO, de niobium Nb₂O₅ ou de tantale Ta₂O₅ ou d'une séquence de deux couches de ce type. On pourra pour plus de détails se reporter aux brevets EP-0 611 213 et EP-0 678 434. Il n'est pas exclu que ces couches de mouillage, en les choisissant poreuses, puissent aussi jouer le rôle de couches absorbantes.

Selon un mode de réalisation de l'invention, une au moins des couches fonctionnelles est surmontée d'un revêtement comprenant la séquence couche absorbante couche-barrière du type SnO₂/Si₃N₄ ou WO₃/Si₃N₄, Si₃N₄ pouvant être remplacé par un mélange d'AIN et de Si₃N₄.

Selon un autre mode de réalisation, on a cette fois une séquence du type couche absorbante / couche fonctionnelle / couche-barrière (avec éventuellement des couches « intermédiaires » de part et d'autre de la couche fonctionnelle), avec notamment une couche en SnO₂ ou WO₃ sous la couche fonctionnelle et une couche de Si₃N₄ ou d'AlN et Si₃N₄ au-dessus de la couche fonctionnelle.

Le vitrage selon l'invention comporte au moins le substrat porteur de l'empilement, éventuellement associé à au moins un autre substrat. Ils peuvent tous être clairs, ou colorés, notamment au moins un des substrats peut être en verre coloré dans la masse. Le choix du type de coloration va dépendre du niveau de transmission lumineuse et/ou de l'aspect colorimétrique recherchés pour le vitrage une fois sa fabrication achevée. Ainsi pour des vitrages destinés à équiper des véhicules, des normes imposent que le pare-brise ait une transmission lumineuse T_{L} d'environ 75%, un tel niveau de transmission n'étant pas exigé pour les vitrages latéraux ou le toit-auto, par exemple. Les verres teintés que l'on peut retenir sont par exemple ceux qui, pour une épaisseur de 4 mm, présentent une T_{L} de 65 % à 95 %, une transmission énergétique T_{E} de 40 % à 80 %, une longueur d'onde dominante en transmission de 470 nm à 525 nm associée à une pureté de transmission de 0,4 % à 6 % selon l'Illuminant D₆₅, ce que l'on peut « traduire » dans le système de colorimétrie (L, a*, b*) par des valeurs de a* et b* en transmission respectivement comprises entre -9 et 0 et entre -8 et +2.

Il peut s'agir des verres commercialisés sous le nom de PARSOL par SAINT-GOBAIN VITRAGE, notamment ceux de teinte vert de gris. Il peut aussi s'agir des verres de la gamme dit « TSA » également commercialisée par SAINT-GOBAIN VITRAGE, et des verres dont la composition et les propriétés sont notamment décrits dans les brevets EP-0 616 883, EP-0 644 164, EP-0 722 427 et WO-96/00394.

Le vitrage selon l'invention peut présenter une structure feuilletée, associant notamment au moins deux substrats rigides du type verre par au moins une feuille de polymère thermoplastique, afin de présenter une structure de type verre/empilement de couches minces/feuille(s)/verre. Le polymère peut notamment être à base de polyvinylbutyral PVB, éthylène vinylacétate EVA, polyéthylène téréphtalate PET, polychlorure de vinyle PVC.

Le vitrage peut aussi présenter une structure de vitrage feuilleté dit asymétrique, associant à un substrat rigide de type verre au moins une feuille de polymère de type polyuréthane à propriétés d'absorbeur d'énergie, éventuellement associée à une autre couche de polymères à propriétés « auto-cicatrisantes ». Pour plus de détails sur ce type de vitrage, on pourra se reporter notamment aux brevets EP-0 132 198, EP-0 131 523, EP-0 389 354. Le vitrage peut alors présenter une structure de type verre/empilement de couches minces/feuille(s) de polymère.

Les vitrages selon l'invention sont aptes à subir un traitement thermique sans dommage pour l'empilement de couches minces. Ils sont donc éventuellement bombés et/ou trempés. Dans le cas où ils sont bombés, notamment en vue de constituer des vitrages pour véhicules, l'empilement de couches minces se trouve de préférence sur une face au moins partiellement non plane. Dans une structure feuilletée, il est de préférence en contact avec la feuille de polymère.

Le vitrage peut être aussi bombé et/ou trempé en étant constitué d'un seul substrat, celui muni de l'empilement. On parle alors de vitrage « monolithique ». Le vitrage peut aussi être un vitrage multiple, notamment un double-vitrage, au moins le substrat porteur de l'empilement étant bombé et/ou trempé. Il est préférable dans une configuration de vitrage multiple que l'empilement soit disposé de manière à être tourné du côté de la lame de gaz intercalaire.

Lorsque le vitrage est monolithique ou en vitrage multiple du type double-vitrage, au moins le substrat porteur de l'empilement peut être en verre trempé.

Les vitrages de l'invention, de manière générale, sont préférablement conçus de manière à présenter une valeur de transmission lumineuse de 50 à 85%, notamment de 60 à 80%, avec des valeurs de réflexion R_{L} inférieures à 20%, notamment inférieures à 13% et des valeurs de a* et b* négatives en réflexion extérieure : on peut ainsi notamment « balayer » toute la gamme de T_{L} rencontrée dans les vitrages pour véhicules, avec en coloration extérieure une teinte plutôt vers les bleus-verts qui est jugée assez esthétique actuellement.

L'invention concerne également le procédé de fabrication des vitrages, qui consiste à déposer l'empilement de couches minces sur son substrat en verre par une technique sous vide du type pulvérisation cathodique éventuellement assistée par champ magnétique, puis à effectuer sur le substrat revêtu un traitement thermique de bombage/trempe ou recuit sans dégradation de sa qualité optique.

Il n'est toutefois pas exclu que la première ou les premières couches puissent être déposée(s) par une autre technique, par exemple par une technique de décomposition thermique de type pyrolyse.

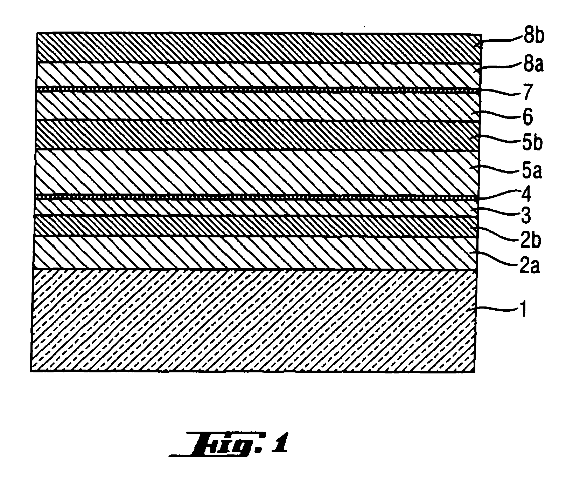

Les détails et caractéristiques avantageuses de l'invention ressortent des exemples non limitatifs suivants, illustrés à l'aide de la figure 1 pour les exemples 1 à 3.

La figure 1 représente un empilement selon l'invention, et ne respecte pas les proportions entre les épaisseurs des différents matériaux afin que sa lecture en soit facilitée.

Dans les exemples 1 à 3 qui suivent, l'empilement est déposé sur le substrat 1, qui est un substrat en verre silico-sodo-calcique clair de 2 mm d'épaisseur. L'empilement se décompose en deux couches fonctionnelles d'argent 3, 6 d'épaisseurs identiques, ou différentes avec la première couche 3 d'épaisseur inférieure à celle de la seconde couche 6 conformément à l'enseignement du brevet EP-0 638 528. Sur chacune des couches fonctionnelles 3, 6 est disposée une fine couche « sacrificielle » métallique au moins partiellement oxydée 4, 7.

Sous chacune des couches fonctionnelles 3, 6 se trouve une ou une pluralité de couches superposées à base de matériau diélectrique référencées 2a, 2b et 5a, 5b.

Sur la dernière couche fonctionnelle 6 en comptant à partir du substrat, et au-dessus de la couche sacrificielle 7 se trouve une couche ou une superposition de couches en matériau diélectrique 8a, 8b.

On a donc une structure utilisant un premier revêtement regroupant les couches 2a et 2b, une couche d'argent 3, un second revêtement regroupant les couches 4, 5a et 5b, une seconde couche d'argent 6 et un troisième revêtement regroupant les couches 7, 8a et 8b.

Dans les exemples 1 à 3 :
□ les couches sacrificielles 4, 7 sont en Nb
□ les couches 2a sont en SnO₂
□ les couches 2b sont en ZnO
□ les couches 5a sont en Si₃N₄
□ les couches 5b sont en ZnO
□ les couches 8b sont en Si₃N₄
□ les couches 3, 6 sont en argent.

Seule change, dans les différents exemples 1 à 3, la nature de la couche 8a. Au sens de l'invention, les couches 5a et 8b en Si₃N₄ jouent le rôle de couches-barrière à l'oxygène, vis-à-vis respectivement des couches d'argent 3 et 6, la couche « absorbante » au sens de l'invention étant la couche 8a de l'exemple 2, apte donc à absorber une certaine quantité d'argent migrant de la couche d'argent 6 au-dessus de laquelle elle se trouve déposée.

Dans tous ces exemples, les dépôts successifs des couches de l'empilement s'effectuent par pulvérisation cathodique assistée par champ magnétique, mais toute autre technique de dépôt peut être envisagée à partir du moment où elle permet un bon contrôle et une bonne maîtrise des épaisseurs des couches à déposer.

L'installation de dépôt comprend au moins une chambre de pulvérisation munie de cathodes équipées de cibles en matériaux appropriés sous lesquels le substrat 1 passe successivement. Ces conditions de dépôt pour chacune des couches sont les suivantes :
□ les couches 3, 6 à base d'argent sont déposées à l'aide d'une cible en argent, sous une pression de 0,8 Pa dans une atmosphère d'argon,
□ les couches 2a à base de SnO₂ sont déposées par pulvérisation réactive à l'aide d'une cible d'étain, sous une pression de 0,8 Pa et dans une atmosphère argon/oxygène dont 36% volumique d'oxygène,
□ les couches 4, 7 à base de Nb sont déposées à l'aide d'une cible en niobium, toujours sous la même pression et dans une atmosphère d'argon,
□ les couches 5a, 8b en Si₃N₄ sont déposées par pulvérisation réactive à l'aide d'une cible en silicium dopée au bore ou à l'aluminium, sous une pression de 0,8 Pa dans une atmosphère argon/azote dont 20 % volumique d'azote,
□ les couches 2b et 5b en ZnO sont déposées par pulvérisation réactive à l'aide d'une cible en zinc sous une même pression et dans une atmosphère argon/oxygène dont 40 % volumique d'oxygène.

Les densités de puissance et les vitesses de défilement du substrat 1 sont ajustées de manière connue pour obtenir les épaisseurs de couches voulues.

### EXEMPLE 1, hors invention

Dans cet exemple, la couche 8a est en oxyde de tungstène WO₃ obtenu par pulvérisation réactive d'une cible de W sous pression de 0,8 Pa dans une atmosphère argon/oxygène dont 20 % volumique d'oxygène.

### EXEMPLE 2, selon l'invention

Dans cet exemple, la couche 8a est en oxyde de zinc « poreux » déposé avec une pression de 1,2 Pa nettement supérieure à celle envisagée pour les couches 2b et 5b. Sa porosité est évaluée à 15 %.

### EXEMPLE 3, hors invention

Dans cet exemple la couche 8a est en SnO₂, déposée comme la couche 2a.

Le tableau 1 ci-dessous précise pour, chacun des trois exemples, la nature et les épaisseurs (en nanomètres) des couches de l'empilement en question.

**TABLEAU 1**

| | | **EXEMPLE 1** | **EXEMPLE 2** | **EXEMPLE 3** |
|---|---|---|---|---|
| verre | (1) | - | - | - |
| SnO₂ | (2a) | 20 | 20 | 20 |
| ZnO | (2b) | 17 | 17 | 17 |
| Ag | (3) | 9 | 9 | 9 |
| Nb | (4) | 0,7 | 0,7 | 0,7 |
| Si₃N₄ | (5a) | 65 | 65 | 65 |
| ZnO | (5b) | 25 | 25 | 25 |
| Ag | (6) | 9 | 9 | 9 |
| Nb | (7) | 0.7 | 0,7 | 0,7 |
| couche 8a | (8a) | (WO₃) : 2 | (ZnO) : 2 | (SnO₂) : 2 |
| Si₃N₄ | (8b) | 37,5 | 37,5 | 37,5 |

Chacun de ces substrats revêtus a ensuite été soumis à un traitement thermique à plus de 620°C puis bombés, et assemblés avec un substrat de même nature mais non revêtu et de même bombage à l'aide d'une feuille thermoplastique de polyvinylbutyral de 0,80 mm d'épaisseur, par calandrage à chaud de manière connue, afin de présenter une structure feuilletée substrat (1)/couches/PVB/substrat (2), avec la face du substrat 1 sur lequel est disposé l'empilement de couches de forme non plane, dans un montage type pare-brise automobile.

Le tableau 2 ci-dessous indique, pour chacun de ces exemples
□ les valeurs de transmission lumineuse T_{L} en % (illuminant D₆₅),
□ les valeurs de transmission énergétique T_{E} en %,
□ les valeurs de a* et b* dans le système de colorimétrie (L, a* et b*) en transmission a*(T) et b*(T),
□ la valeur de réflexion lumineuse extérieure R_{L} en % (illuminant D₆₅),
□ les valeurs de a* et b* dans le système de colorimétrie (L, a* et b*) en réflexion a*(R) et b*(R),
et cela d'une part pour les substrats (1) revêtus avant bombage et feuilletage (« monolithique »), et d'autre part pour les substrats (1) revêtus une fois bombés et assemblés en vitrage feuilleté (« feuilleté »).

**TABLEAU 2**

| | T_{L} | T_{E} | a*(T) | b*(T) | R_{L} | a*(R) | b*(R) |
|---|---|---|---|---|---|---|---|
| Exemple 1 | | | | | | | |
| monolithique | 80 | 51 | -2,1 | 1,9 | 5 | -1 | -1,5 |
| feuilleté | 75 | 42 | -2,9 | 5,9 | 11 | -1,7 | -16,6 |

| Exemple 2 | | | | | | | |
|---|---|---|---|---|---|---|---|
| monolithique | 80 | 51 | -2,1 | 1,9 | 5,5 | -1,1 | -1,5 |
| feuilleté | 75 | 41 | -3 | 5,7 | 10,5 | -2 | -14,7 |

| Exemple 3 | | | | | | | |
|---|---|---|---|---|---|---|---|
| monolithique | 80 | 51 | -2,1 | 1,9 | 5,5 | -1 | -1,5 |
| feuilleté | 75 | 41 | -3 | 5,7 | 11 | -2,2 | -14,5 |

En outre, les substrats revêtus une fois bombés présentent une qualité optique équivalente à celle qu'ils avaient avant le traitement thermique : il n'y a ni apparition visible de mouchetis, ni apparition d'un niveau de flou résiduel.

De ces résultats peuvent être tirées les conclusions suivantes :
□ même d'épaisseur peu élevée, la couche 8a absorbante, poreuse (ZnO) est suffisamment efficace pour relâcher les contraintes de la dernière couche d'argent 6 en absorbant l'argent «excédentaire» de celle-ci, et ainsi pour supprimer les problèmes de dégradation optiques aléatoire qui pourraient apparaître dans des empilements similaires, mais dépourvus de ce type de couche,
□ les couches absorbantes « supplémentaires » ne pénalisent pas thermiquement ou optiquement l'empilement : les vitrages restent dans les bleus-verts en réflexion (a*(R) et b*(R) négatifs), qu'il s'agisse d'un vitrage « monolithique » ou « feuilleté », et on peut parvenir à maintenir des valeurs de T_{L} d'au moins 75% en feuilleté, ce qui a de l'importance dans le domaine de l'automobile quand ce type de vitrage est utilisé comme pare-brise,
□ le bombage étant un traitement thermique qui peut être considéré comme encore plus « sollicitant » mécaniquement et thermiquement que la trempe, on peut donc aussi a fortiori utiliser ces vitrages comme vitrages trempés non bombés, par exemple de structure en double-vitrage utilisé dans le bâtiment, et obtenir la même qualité optique,
□ à noter également que l'on conserve l'avantage des empilements décrits dans le brevet EP-0 718 250, en ce sens que l'opération thermique du vitrage, non seulement préserve sa qualité optique, (c'était le but de la présente invention), mais en outre, grâce notamment à la présence des couches-barrière en Si₃N₄, ne modifient pas significativement ses propriétés optiques/thermiques (la diminution de T_{L} du feuilleté par rapport au monolithique provenant bien sûr de l'adjonction de la feuille de PVB et du deuxième verre).

## Revendications

1. Vitrage comprenant au moins un substrat verrier transparent (1) muni d'un empilement de couches minces comportant une alternance de « n » couches fonctionnelles » (3, 6) à propriétés de réflexion dans l'infrarouge et/ou dans le rayonnement solaire, métallique à base d'argent ou d'alliage métallique contenant de l'argent, et de « (n + 1) » revêtements, avec n ≥ 2, lesdits revêtements étant composés d'une ou d'une pluralité de couches dont au moins une en matériau diélectrique (2a, 2b 5a, 5b 8a, 8b), de manière à ce que chaque couche fonctionnelle (3, 6) soit disposée entre deux revêtements (2a, 2b ; 4, 5a, 5b ; 7, 8a, 8b), ***caractérisé en ce qu'**en* vue de préserver la qualité optique de l'empilement au cas où le substrat (1) muni dudit empilement est soumis à un traitement thermique de trempe, bombage, recuit :
o d'une part, le revêtement disposé au-dessus de la nième couche fonctionnelle (6) comporte au moins une couche « barrière » (8b) en un matériau faisant « barrière » au moins à l'oxygène, et à l'eau, et qui est à base de composés de silicium SiO₂, SiOₓC_{y}, SiOₓN_{y}, nitrure de silicium Si₃N₄ ou d'un mélange d'au moins deux de ces composés ou d'un mélange d'AlN et de Si₃N₄.
o d'autre part, au moins une couche « absorbante » (8a) en un matériau apte à « absorber » le matériau constitutif de ladite couche fonctionnelle (6) fait partie du revêtement disposé au-dessus de ladite couche fonctionnelle (6) et sous la couche « barrière » (8b), la couche « absorbante » étant en un matériau poreux, d'une porosité comprise entre 5 et 25%, d'une épaisseur géométrique comprise entre 2 et 30 nm, et étant :
■ soit essentiellement métallique, en un matériau choisi parmi l'un au moins des métaux suivants Ni, Cr, Nb, Sn, Ti, notamment d'une épaisseur comprise entre 2 et 5 nm,
■ soit en matériau diélectrique choisi parmi l'un au moins des oxydes suivants : ZnO, TiO₂, Al₂O₃.

2. Vitrage selon la revendication 1, ***caractérisé en ce que*** l'empilement comporte deux couches fonctionnelles (3, 6) alternées avec trois revêtements (2a, 2b, 4, 5a, 5b ; 7, 8a, 8b).

3. Vitrage selon l'une des revendications précédentes, ***caractérisé en ce que*** la couche « barrière » est d'une épaisseur géométrique supérieure ou égale à 15 nm.

4. Vitrage selon l'une des revendications précédentes, ***caractérisé en ce qu'**au* moins une des couches fonctionnelles est surmontée d'une fine couche métallique « sacrificielle » au moins partiellement oxydée, notamment d'une épaisseur de 0,5 à 4 nm.

5. Vitrage selon les revendications 1 et 4, ***caractérisé en ce que*** la couche « absorbante » métallique fait partie du revêtement disposé au-dessus de la couche fonctionnelle et directement au contact de celle-ci, en jouant également le rôle de couche « sacrificielle ».

6. Vitrage selon l'une des revendications précédentes, ***caractérisé en ce que*** l'empilement comprend deux couches fonctionnelles (3, 6), à chacune desquelles sont associées une couche « barrière » et une couche « absorbante ».

7. Vitrage selon l'une des revendications précédentes, ***caractérisé en ce que*** la couche « barrière » ou au moins une des couches « barrières » est en-dessous dans le revêtement d'au moins une autre couche, notamment en oxyde(s) métallique(s) choisi dans le groupe comprenant ZnO, SnO₂, TiO₂, Nb₂O₅ , Ta₂O₅, Al₂O₃, WO₃, ou tout mélange d'au moins deux de ces oxydes.

8. Vitrage selon l'une des revendications précédentes, ***caractérisé en ce que*** la couche fonctionnelle ou au moins l'une des couches fonctionnelles est disposée sur un revêtement dont la dernière couche facilite le mouillage de la couche fonctionnelle, dernière couche choisie parmi l'un des oxydes suivants : Ta₂O₅, Nb₂O₅, ZnO.

9. Vitrage selon l'une des revendications précédentes, ***caractérisé en ce qu'**au* moins une des couches fonctionnelles est surmontée d'un revêtement comprenant la séquence SnO₂/Si₃N₄ ou WO₃/Si₃N₄.

10. Vitrage selon l'une des revendications précédentes, ***caractérisé en ce qu'**au* moins une des couches fonctionnelles (3, 6) est disposée au-dessus d'une couche de WO₃ ou de SnO₂ et au-dessous d'une couche en Si₃N₄, ou mélange de Si₃N₄ et d'AIN.

11. Vitrage selon l'une des revendications précédentes, ***caractérisé en ce qu'**au* moins un des substrats transparents constitutifs est en verre clair ou teinté dans la masse.

12. Vitrage selon l'une des revendications précédentes, ***caractérisé en ce qu'**il* est feuilleté, associant notamment au moins deux substrats rigides du type verre par au moins une feuille de polymère thermoplastique, avec une structure de type verre/empilement de couches minces/feuille(s) de polymère/verre.

13. Vitrage selon l'une des revendications 1 à 11, ***caractérisé en ce qu'**il* est feuilleté du type vitrage feuilleté « asymétrique » associant à un substrat rigide de type verre au moins une feuille de polymère à propriétés d'absorbeur d'énergie à base de polyuréthane, avec une structure du type verre/empilement de couches minces/feuille(s) de polymère.

14. Vitrage selon l'une des revendications précédentes, ***caractérisé en ce qu'**il* est bombé.

15. Vitrage selon l'une des revendications précédentes monté en monolithique ou en vitrage multiple du type double-vitrage, ***caractérisé en ce qu'**au* moins le substrat porteur de l'empilement est en verre trempé.

16. Vitrage selon l'une des revendications précédentes, ***caractérisé en ce qu'**il* présente une valeur de T_{L} de 50 à 85%, une valeur de R_{L} inférieure à 20%, et de préférence, des valeurs de a* et b* négatives en réflexion extérieure.

17. Procédé de fabrication du vitrage selon l'une des revendications précédentes, ***caractérisé en ce qu'**on* dépose l'empilement de couches minces sur son substrat en verre par une technique sous vide du type pulvérisation cathodique éventuellement assistée par champ magnétique, puis **en *ce qu'****on* effectue un bombage, trempe ou recuit sur ledit substrat, sans dégradation de sa qualité optique.

## Patentansprüche

1. Glasscheibe, die wenigstens ein transparentes Glassubstrat (1) umfasst, das mit einem Aufbau aus dünnen Schichten versehen ist, umfassend eine Abfolge aus "n" Funktionsschichten (3, 6) mit Reflexionseigenschaften im Infrarotbereich und/oder im Bereich der Sonnenstrahlung, die metallisch auf der Basis von Silber oder einer silberhaltigen Metalllegierung sind, sowie aus "(n + 1)" Beschichtungen, mit n ≥ 2, wobei die Beschichtungen aus einer oder mehreren Schichten bestehen, darunter wenigstens eine aus dielektrischem Material (2a, 2b, 5a, 5b, 8a, 8b), derart, dass jede Funktionsschicht (3, 6) zwischen zwei Beschichtungen (2a, 2b; 4, 5a, 5b; 7, 8a, 8b) angeordnet ist, **dadurch gekennzeichnet, dass**, um die optische Qualität des Schichtaufbaus in dem Fall zu erhalten, dass das mit dem Schichtaufbau versehene Substrat (1) einer Wärmebehandlung zum Vorspannen, Biegen, Abkühlen unterzogen wird:
- einerseits die Beschichtung, die auf der n-ten Funktionsschicht (6) angeordnet ist, wenigstens eine "Barriere"-Schicht (8b) aus einem Material umfasst, das wenigstens gegenüber Sauerstoff und Wasser eine Barriere bildet und das auf der Basis von Siliciumverbindungen SiO₂, SiOₓC_{y}, SiOₓN_{y}, Siliciumnitrid Si₃N₄ oder einem Gemisch aus wenigstens zwei dieser Verbindungen oder einem Gemisch aus AlN und Si₃N₄ ist,
- andererseits wenigstens eine "absorbierende" Schicht (8a) aus einem Material, das in der Lage ist, das die Funktionsschicht (6) bildende Material "zu absorbieren", zu der Beschichtung gehört, die auf der Funktionsschicht (6) und unter der "Barriere"-Schicht (8b) angeordnet ist, wobei die "absorbierende" Schicht aus einem porösen Material mit einer Porosität im Bereich zwischen 5 und 25 %, mit einer geometrischen Dicke im Bereich zwischen 2 und 30 nm besteht und:
• entweder im Wesentlichen metallisch, aus einem Material, das aus wenigstens einem der folgenden Metalle Ni, Cr, Nb, Sn, Ti, ausgewählt ist, insbesondere mit einer Dicke im Bereich zwischen 2 und 5 nm ist,
• oder aus dielektrischem Material besteht, das aus wenigstens einem der folgenden Oxide ausgewählt ist: ZnO, TiO₂, Al₂O₃.

2. Glasscheibe nach Anspruch 1, **dadurch gekennzeichnet, dass** der Schichtaufbau zwei Funktionsschichten (3, 6) enthält, die mit drei Beschichtungen (2a, 2b, 4, 5a, 5b; 7, 8a, 8b) abgewechselt sind.

3. Glasscheibe nach einem der vorhergehenden Ansprüche, **dadurch gekennzeichnet, dass** die "Barriere"-Schicht eine geometrische Dicke von mehr als oder gleich 15 nm aufweist.

4. Glasscheibe nach einem der vorhergehenden Ansprüche, **dadurch gekennzeichnet, dass** auf wenigstens einer der Funktionsschichten eine feine metallische, wenigstens teilweise oxidierte "Opfer"-Schicht, insbesondere mit einer Dicke von 0,5 bis 4 nm angeordnet ist.

5. Glasscheibe nach den Ansprüchen 1 und 4, **dadurch gekennzeichnet, dass** die metallische "absorbierende" Schicht zu der Beschichtung gehört, die auf der Funktionsschicht angeordnet ist und sich direkt in Kontakt mit dieser befindet, wobei sie auch die Aufgabe einer "Opfer"-Schicht übernimmt.

6. Glasscheibe nach einem der vorhergehenden Ansprüche, **dadurch gekennzeichnet, dass** der Schichtaufbau zwei Funktionsschichten (3, 6) umfasst, welchen jeweils eine "Barriere"-Schicht und eine "absorbierende" Schicht zugeordnet sind.

7. Glasscheibe nach einem der vorhergehenden Ansprüche, **dadurch gekennzeichnet, dass** sich die "Barriere"-Schicht oder wenigstens eine der "Barriere"-Schichten darunter in der Beschichtung wenigstens einer weiteren Schicht befindet, insbesondere aus Metalloxid(en), ausgewählt aus der Gruppe umfassend ZnO, SnO₂, TiO₂, Nb₂O₅, Ta₂O₅, Al₂O₃, WO₃ oder jedwedem Gemisch aus wenigstens zwei dieser Oxide.

8. Glasscheibe nach einem der vorhergehenden Ansprüche, **dadurch gekennzeichnet, dass** die Funktionsschicht oder wenigstens eine der Funktionsschichten auf einer Beschichtung angeordnet ist, deren letzte Schicht das Benetzen der Funktionsschicht erleichtert, letzte Schicht, die aus einem der folgenden Oxide ausgewählt ist: Ta₂O₅, Nb₂O₅, ZnO.

9. Glasscheibe nach einem der vorhergehenden Ansprüche, **dadurch gekennzeichnet, dass** auf wenigstens einer der Funktionsschichten eine Beschichtung angeordnet ist, welche die Folge SnO₂/Si₃N₄ oder WO₃/Si₃N₄ umfasst.

10. Glasscheibe nach einem der vorhergehenden Ansprüche, **dadurch gekennzeichnet, dass** wenigstens eine der Funktionsschichten (3, 6) auf einer Schicht aus WO₃ oder aus SnO₂ und unter einer Schicht aus Si₃N₄ oder einem Gemisch aus Si₃N₄ und AlN angeordnet ist.

11. Glasscheibe nach einem der vorhergehenden Ansprüche, **dadurch gekennzeichnet, dass** wenigstens eines der sie bildenden transparenten Substrate aus Klarglas oder in der Masse gefärbtem Glas besteht.

12. Glasscheibe nach einem der vorhergehenden Ansprüche, **dadurch gekennzeichnet, dass** sie geschichtet, insbesondere wenigstens zwei starre Substrate vom Typ Glas durch wenigstens eine thermoplastische Polymerfolie verbindet, mit einer Struktur vom Typ Glas/Aufbau aus dünnen Schichten/Polymerfolie(n)/Glas ist.

13. Glasscheibe nach einem der Ansprüche 1 bis 11, **dadurch gekennzeichnet, dass** sie geschichtet vom Typ "asymmetrische" Verbundglasscheibe, die einem starren Substrat vom Typ Glas wenigstens eine Polymerfolie mit energieabsorbierenden Eigenschaften auf der Basis von Polyurethan zuordnet, mit einer Struktur vom Typ Glas/Aufbau aus dünnen Schichten/Polymerfolie(n) ist.

14. Glasscheibe nach einem der vorhergehenden Ansprüche, **dadurch gekennzeichnet, dass** sie gebogen ist.

15. Glasscheibe nach einem der vorhergehenden Ansprüche, die in monolithischer Form oder als Mehrfachverglasung vom Typ Doppelverglasung eingebaut ist, **dadurch gekennzeichnet, dass** wenigstens das Trägersubstrat des Schichtaufbaus aus vorgespanntem Glas besteht.

16. Glasscheibe nach einem der vorhergehenden Ansprüche, **dadurch gekennzeichnet, dass** sie einen Wert T_{L} von 50 bis 85 %, einen Wert R_{L} von unter 20 % und vorzugsweise negative a*- und b*-Werte bei äußerer Reflexion besitzt.

17. Verfahren zur Herstellung der Glasscheibe nach einem der vorhergehenden Ansprüche, **dadurch gekennzeichnet, dass** der Aufbau aus dünnen Schichten durch eine Vakuumtechnik vom Typ Kathodenzerstäubung, eventuell magnetfeldgestützt, auf sein Glassubstrat aufgebracht wird, **und dass** anschließend an dem Substrat ein Biegen, Vorspannen oder Abkühlen, ohne Beeinträchtigung seiner optischen Qualität, vorgenommen wird.

## Claims

1. Glazing comprising at least one transparent glass substrate (1) provided with a stack of thin layers comprising an alternation of "n" functional layers (3, 6) with properties of reflection in the infrared and/or in the solar radiation range, metallic based on silver or metallic alloy containing silver, and "(n + 1)" coatings, with n ≥ 2, the said coatings being composed of one or a plurality of layers including at least one in a dielectric material (2a, 2b, 5a, 5b, 8a, 8b), so that each functional layer (3, 6) is disposed between two coatings (2a, 2b; 4, 5a, 5b; 7, 8a, 8b), **characterised in that**, with a view to preserving the optical quality of the stack should the substrate (1) provided with the said stack be subjected to heat treatment of toughening, curving or annealing:
• firstly, the stack disposed above the n^{th} functional layers (6) comprises at least one "barrier" layer (8b) made from a material forming a "barrier" at least to oxygen, and to water, and which is based on silicon compounds SiO₂, SiOₓC_{y}, SiOₓN_{y}, silicon nitride Si₃N₄ or a mixture of at least two of these compounds or a mixture of AlN and Si₃N₄,
• secondly, at least one "absorbent" layer (8a) made from a material able to "absorb" material constituting the said functional layer (6) forms part of the coating disposed on top of the said functional layer (6) and under the "barrier" layer (8b), the "absorbent" layer being in a porous material, with a porosity between 5% and 25%, with a thickness between 2 and 30 nm, and being:
o either essentially metallic, in a material chosen from amongst at least one of the following metals Ni, Cr, Nb, Sn, Ti, in particular with a thickness of between 2 and 5 nm,
o either in a material chosen from amongst at least one of the following oxides: ZnO, TiO₂, Al₂O₃.

2. Glazing according to Claim 1, **characterised in that** the stack comprises two functional layers (3, 6) alternating with three coatings (2a, 2b, 4, 5a, 5b; 7, 8a, 8b).

3. Glazing according to one of the preceding claims, **characterised in that** the "barrier" layer has a geometric thickness greater than or equal to 15 nm.

4. Glazing according to one of the preceding claims, **characterised in that** at least one of the functional layers is surmounted by a fine "sacrificial" metallic layer at least partially oxidised, in particular with a thickness of 0.5 to 4 nm.

5. Glazing according to Claims 1 and 4, **characterised in that** the metallic "absorbent" layer forms part of the coating disposed on top of the functional layer and directly in contact therewith, also fulfilling the role of "sacrificial" layer.

6. Glazing according to one of the preceding claims, **characterised in that** the stack comprises two functional layers (3, 6), with each of which there are associated a "barrier" layer and an "absorbent" layer.

7. Glazing according to one of the preceding claims, **characterised in that** the "barrier" layer or at least one of the "barrier" layers is underneath in the coating at least one other layer, in particular of metallic oxide or oxides chosen from the group comprising ZnO, SnO₂, TiO₂, Nb₂O₅, Ta₂O₅, Al₂O₃, WO₃, or any mixture of at least two of these oxides.

8. Glazing according to one of the preceding claims, **characterised in that** the functional layer or at least one of the functional layers is disposed on a coating, the last layer of which facilitates the wetting of the functional layer, a last layer chosen from amongst one of the following oxides: Ta₂O₅ , Nb₂O₅, ZnO.

9. Glazing according to one of the preceding claims, **characterised in that** at least one of the functional layers is surmounted by a coating comprising the sequence SnO_{2/}Si₃N₄ or WO_{3/}Si₃N₄.

10. Glazing according to one of the preceding claims, **characterised in that** at least one of the functional layers (3, 6) is disposed on top of a layer of WO₃ or SnO₂ and underneath a layer of Si₃N₄, or a mixture of Si₃N₄ and AlN.

11. Glazing according to one of the preceding claims, **characterised in that** at least one of the constituent transparent substrates is made from clear or self-coloured glass.

12. Glazing according to one of the preceding claims, **characterised in that** it is laminated, associating in particular at least two rigid substrates of the glass type with a least one sheet of thermoplastic polymer, with a structure of the glass/stack of thin layers/sheet(s) of polymer/glass type.

13. Glazing according to one of Claims 1 to 11, **characterised in that** it is laminated of the "asymmetric" laminated glazing type associating with a rigid substrate of the glass type at least one sheet of polymer with energy absorbing properties based on polyurethane, with a structure of the glass/stack of thin layers/sheet(s) of polymer type.

14. Glazing according to one of the preceding claims, **characterised in that** it is bent.

15. Glazing according to one of the preceding claims, mounted in a single piece or in multiple glazing of the double-glazing type, **characterised in that** at least the carrying substrate of the stack is toughened.

16. Glazing according to one of the preceding claims, **characterised in that** it has a T_{L} value of 50% to 85%, an R_{L} value of less than 20% and, preferably, negative a* and b* external reflection values.

17. Method of manufacturing the glazing according to one of the preceding claims, **characterised in that** the stack of thin layers is deposited on its glass substrate by means of a vacuum technique of the cathodic sputtering type possibly assisted by magnetic field, and then **in that** a bending, toughening or annealing is carried out on the said substrate, without degradation of its optical quality.
